# EUROPEAN PATENT APPLICATION

(11) **EP 4 024 271 A1**
(43) Date of publication of application: **06.07.2022**
(21) Application number: 20880609.1
(22) Date of filing: 15.10.2020
(51) Int. Cl.: G06K 9/00

(54) **UNDER-SCREEN OPTICAL FINGERPRINT MODULE, DISPLAY SCREEN ASSEMBLY, AND ELECTRONIC DEVICE**

(30) Priority: 30.10.2019 CN 201911047952
(71) Applicant: GUANGDONG OPPO MOBILE TELECOMMUNICATIONS CORP., LTD., Dongguan, Guangdong 523860 (CN)
(72) Inventor: WU, Anping, Dongguan, Guangdong 523860 (CN); WU, Yutong, Dongguan, Guangdong 523860 (CN)
(74) Representative: Rossi, Ugo
(86) International application number: PCT/CN2020/121194
(87) International publication number: WO 2021/082937

(57) **Abstract**

An under-screen optical fingerprint module, a display screen assembly, and an electronic device. The under-screen optical fingerprint module comprises an image sensor (100) and an optical transmission layer (200); the image sensor (100) is provided with a plurality of photosensitive units (110); the optical transmission layer (200) is located below a display screen body (60) and covers the image sensor (100), and the optical transmission layer (200) is provided with an optical transmission path corresponding to each photosensitive unit (110); each optical transmission path is provided with a collimating element (201) and a light outlet (01); and transmitted light of the display screen body (60) enters the optical transmission path through the collimating element (201), is transmitted to the light outlet (01) along the optical transmission path, and is emitted to the corresponding photosensitive unit (110) from the light outlet (01).

## Description

### CROSS-REFERENCE TO RELATED APPLICATION(S)

This application claims priority and rights of a patent application No. 201911047952.8 filed with China National Intellectual Property Administration on October 30, 2019. The entire contents of the aforementioned application are incorporated herein by reference.

### TECHNICAL FIELD

The present disclosure relates to the technical field of electronic devices, and particularly to an under-screen optical fingerprint module, a display screen assembly and an electronic device.

### BACKGROUND

At present, the under-screen optical fingerprint-type terminal may include a terminal's display screen body and an under-screen fingerprint sensor. The terminal's display screen body may be composed of a glass cover and a display panel. The under-screen fingerprint sensor may be composed of a module frame, an optical lens and an image sensor. The light emitted from the display panel passes through the glass cover and reaches the surface of the user's finger. Due to the different reflectivity of the light at valleys and ridges in the fingerprint, the reflected light formed at the valleys and ridges in the fingerprint also have different intensities. The reflected light reaches the image sensor after passing through the optical lens. The image sensor receives the light, which is reflected by the surface of the user's finger and has different intensities, to form a fingerprint image.

### SUMMARY

The disclosure provides an under-screen optical fingerprint module, a display screen assembly and an electronic device, to reduce crosstalk between adjacent photosensitive units of an image sensor and thus improve the clarity of the fingerprint image.

In a first aspect, the embodiments of the disclosure provide an under-screen optical fingerprint module, which includes:
an image sensor, having a plurality of photosensitive units; and
a light transmission layer, located under a display screen body and covering the image sensor, where the light transmission layer is provided with optical transmission paths each corresponding to one of the photosensitive units, and each of the optical transmission paths is provided with a collimating element and a light outlet;
light transmitted through the display screen body enters the optical transmission paths through the collimating elements, travels to the light outlets along the optical transmission paths, and is incident, from the light outlets, on the corresponding photosensitive units.

In a second aspect, the embodiments of the disclosure provide a display screen assembly, which includes the under-screen optical fingerprint module as proposed in the embodiments of the first aspect of the disclosure, and a display screen body arranged above the under-screen optical fingerprint module.

In a third aspect, the embodiments of the disclosure provide an electronic device, which includes the display screen assembly as proposed in the embodiments of the second aspect of the disclosure, and a housing;
the housing includes a bottom plate and side walls arranged on the bottom plate, a receiving space is defined by the bottom plate and the side walls, and the display screen body of the display screen assembly is provided at a top of the housing opposite to the bottom plate; and
the under-screen optical fingerprint module of the display screen assembly is arranged in the receiving space.

Additional aspects and advantages of the disclosure will be set forth, in part, in the following description, and in part will be apparent from the following description, or learned by practice of the disclosure.

### BRIEF DESCRIPTION OF THE DRAWINGS

In order to illustrate the technical solutions of the embodiments of the disclosure more clearly, the drawings required in the embodiments of the disclosure will be briefly introduced below. Obviously, the drawings described below illustrate only some embodiments of the disclosure. For those of ordinary skill in the art, other drawings can also be obtained from these drawings without any creative effort.
FIG. 1 is a schematic structural diagram of an existing under-screen optical fingerprint-type terminal;
Fig. 2 is a schematic diagram illustrating the definition of Z direction;
FIG. 3 is a schematic diagram illustrating distribution of incident light on a pixel located at the edge of an image sensor in the related art;
FIG. 4 is a schematic structural diagram of an under-screen optical fingerprint module provided by a first embodiment of the disclosure;
FIG. 5 is a first schematic structural diagram of an electronic device in the embodiments of the disclosure;
FIG. 6 is a second schematic structural diagram of the electronic device in the embodiments of the disclosure;
FIG. 7 is a first schematic structural diagram of an optical transmission path in the embodiments of the disclosure;
FIG. 8 is a schematic structural diagram of an under-screen optical fingerprint module provided by a second embodiment of the disclosure;
FIG. 9 is a schematic enlarged cross-sectional view illustrating a first optical transmission path in the embodiments of the disclosure;
FIG. 10 is a schematic diagram illustrating the shapes of a first reflective element and a second reflective element in the embodiments of the disclosure;
FIG. 11 is a schematic diagram illustrating planar features of a first light blocking plate in the embodiments of the disclosure;
FIG. 12 is a schematic diagram illustrating planar features a first light guide plate in the embodiments of the disclosure;
FIG. 13 is a schematic diagram illustrating planar features of a second light guide plate in the embodiments of the application;
FIG. 14 is a schematic diagram illustrating planar features of a second light blocking plate in the embodiments of the disclosure;
FIG. 15 is a schematic diagram illustrating planar features of an image sensor in the embodiments of the disclosure;
FIG. 16 is a schematic structural diagram of an under-screen optical fingerprint module provided by a third embodiment of the disclosure;
FIG. 17 is a schematic enlarged cross-sectional view illustrating a second optical transmission path in the embodiments of the disclosure;
FIG. 18 is a schematic front view of a third light guide plate in the embodiments of the disclosure;
FIG. 19 is a schematic rear view of the third light guide plate in the embodiments of the disclosure;
FIG. 20 is a schematic structural diagram of an under-screen optical fingerprint module provided by a fourth embodiment of the disclosure;
FIG. 21 is a schematic enlarged cross-sectional view illustrating a third optical transmission path in the embodiments of the disclosure;
FIG. 22 is a schematic plan view of a fourth light guide plate in the embodiments of the disclosure;
FIG. 23 is a schematic enlarged cross-sectional view illustrating a fourth optical transmission path in the embodiments of the disclosure;
FIG. 24 is a schematic enlarged cross-sectional view illustrating a fifth optical transmission path in the embodiments of the disclosure;
FIG. 25 is a schematic enlarged cross-sectional view illustrating a sixth optical transmission path in the embodiments of the disclosure;
FIG. 26 is a schematic plan view of a fifth light blocking plate in the embodiments of the disclosure;
FIG. 27 is a schematic plan view of a sixth light blocking plate in the embodiments of the disclosure; and
FIG. 28 is a second schematic structural diagram of the optical transmission path in the embodiments of the disclosure.

### DETAILED DESCRIPTION OF PREFERRED EMBODIMENTS

The embodiments of the disclosure are described in detail in the following. Examples of the embodiments are illustrated in the drawings, in which the same or similar reference numerals refer to the same or similar elements or elements having the same or similar functions throughout. The embodiments described below with reference to the drawings are exemplary, and are intended to explain the disclosure, but should not be construed as limitations to the disclosure.

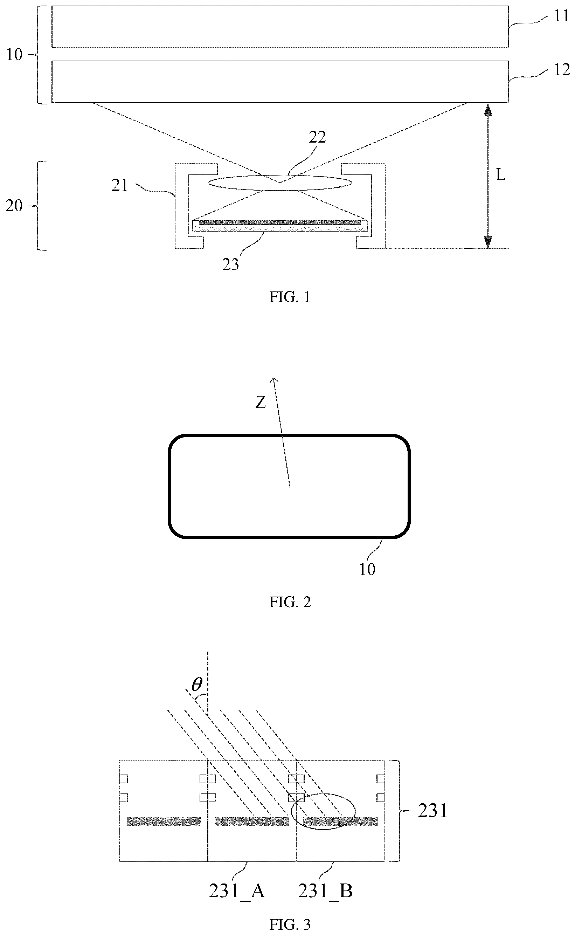

At present, the under-screen optical fingerprint recognition method realizes the under-screen optical fingerprint recognition function, in conjunction with the under-screen optical fingerprint-type terminal as shown in FIG. 1. As shown in FIG. 1, the under-screen optical fingerprint-type terminal may include a terminal's display screen body and an under-screen fingerprint sensor. The terminal's display screen body 10 may be composed of a glass cover 11 and a display panel 12. The under-screen fingerprint sensor 20 may be composed of a module frame 21, an optical lens 22 and an image sensor 23. The light emitted from the display panel 12 passes through the glass cover 11 and reaches the surface of the user's finger. Due to the different reflectivity of the light at the valleys and ridges in the fingerprint, the reflected light formed at the valleys and ridges in the fingerprint also have different intensities. The reflected light reaches the image sensor 23 after passing through the optical lens 22. The image sensor 23 receives the light, which is reflected by the surface of the user's finger and has different intensities, to form a fingerprint image.

However, the under-screen optical fingerprint-type terminal shown in FIG. 1 has obvious shadow and crosstalk problems. Understandably, since there is a certain distance between the pixel located at the edge of the image sensor and the optical axis of the optical lens, a non-zero angle is formed between the incident light of the pixel located at the edge and the vertical direction. This non-zero incident angle would cause signal crosstalk, and reduce the clarity of the fingerprint image. Specifically, the distribution of the incident light on the pixel located at the edge of the image sensor 23 in FIG. 1 is shown in FIG. 3. Since there is a certain distance between the pixel 231 located at the edge and the optical axis of the optical lens 22, a non-zero angle is formed between the incident light of the pixel 231 located at the edge and the vertical direction. This non-zero incident angle would cause a part of the incident light of pixel 231_A to enter the area of pixel 231_B, thereby causing the amount of incident light received by pixel 231_A to decrease, and thus resulting in shadow; in addition, the part of the incident light of pixel 231_A entering pixel 231_B causes signal crosstalk.

Therefore, the embodiments of the disclosure propose an under-screen optical fingerprint module, which is mainly directed at alleviating the technical problem of signal crosstalk between adjacent pixels in the image sensor of the related art.

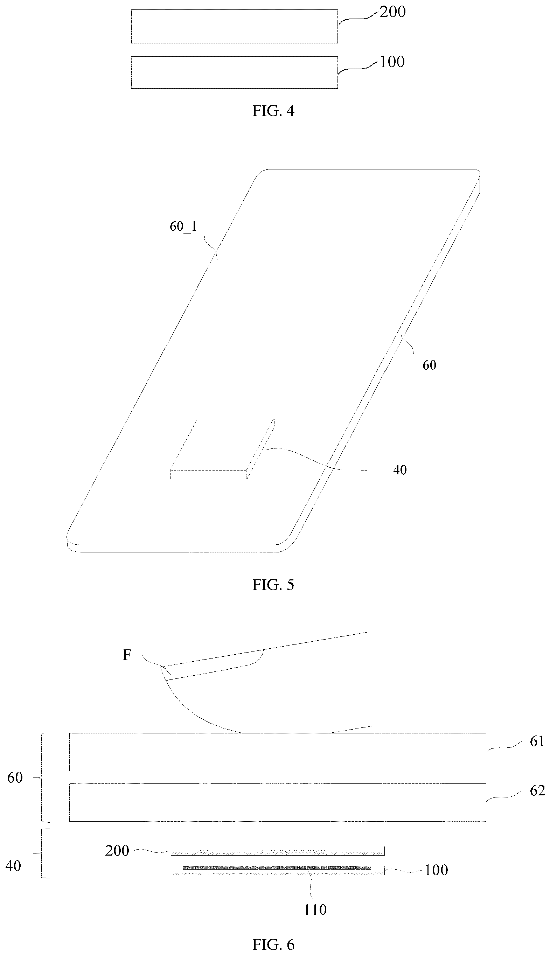

Referring to FIG. 4, the embodiments of disclosure provide an under-screen optical fingerprint module. The under-screen optical fingerprint module includes an image sensor 100 and a light transmission layer 200. The image sensor 100 has a plurality of photosensitive units. The light transmission layer 200 is located under a display screen body and covers the image sensor 100. The light transmission layer 200 is provided with optical transmission paths each corresponding to one of the photosensitive units. Each of the optical transmission paths is provided with a collimating element and a light outlet. Light transmitted through the display screen body enters the optical transmission paths through the collimating elements, travels to the light outlets along the optical transmission paths, and is incident, from the light outlets, on the corresponding photosensitive units.

In some embodiments, each of the optical transmission paths is provided with at least two reflective elements. The light transmitted through the display screen body enters each of the optical transmission paths through the respective collimating element, and is reflected by the at least two reflective elements to the respective light outlet, and then is incident, from the light outlet, on the corresponding photosensitive unit. A propagation direction of the light between two adjacent reflective elements is at an angle with respect to an optical axis of the collimating element.

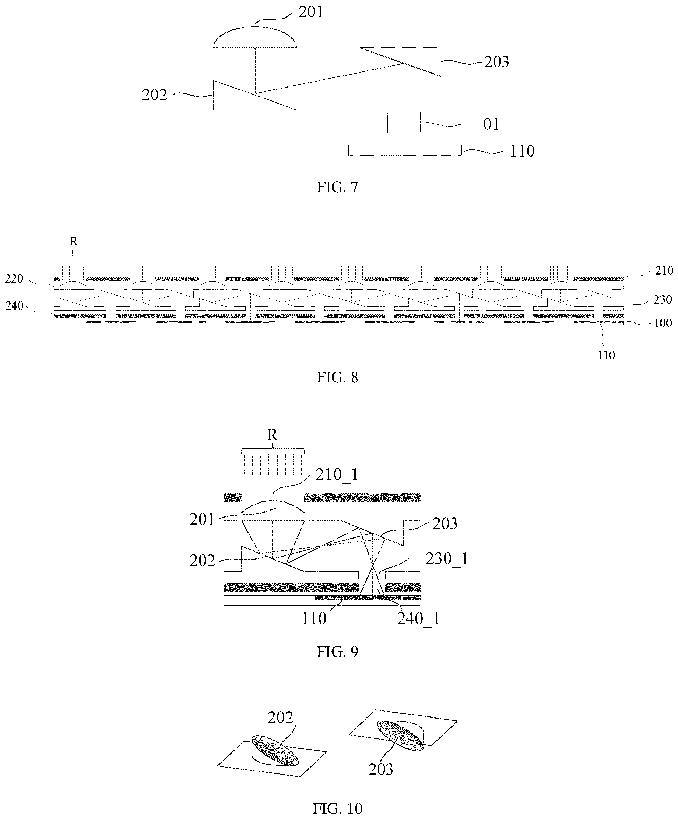

Referring to FIG. 7, in some embodiments, the at least two reflective elements of each of the optical transmission paths include a first reflective element 202 and a second reflective element 203, and a reflective surface of the first reflective element and a reflective surface of the second reflective element are arranged opposite to each other. The first reflective element 202 is arranged on the optical axis of the collimating element 201, and the reflective surface of the first reflective element 202 faces a light-emitting surface of the collimating element 201. The reflective surface of the first reflective element 202 is at an angle with respect to the optical axis. The second reflective element 203 is arranged at an axis perpendicular to a plane where the light outlet is located.

Referring to FIG. 8, in some embodiments, the light transmission layer 200 is multi-layered, and includes a first light blocking plate 210, a first light guide plate 220, a second light guide plate 230 and a second light blocking plate 240 which are arranged in order from the bottom of the display screen body towards the image sensor 100. For each of the optical transmission paths, an opening is provided in the first light blocking plate 210; the collimating element is formed on a side of the first light guide plate 220 close to the first light blocking plate 210, at a position corresponding to the opening of the first light blocking plate 210, the second reflective element is formed on a side of the first light guide plate close to the second light guide plate 220, and the second reflective element is staggered from the collimating element; the first reflective element is formed on a side of the second light guide plate 230 close to the first light blocking plate 210, at a position corresponding to the collimating element, and an opening is provided in the second light guide plate at a position corresponding to the second reflective element; and an opening is provided in the second light blocking plate 240 at a position corresponding to the opening of the second light guide plate 230, and the opening of the second light blocking plate 240 is aligned with the corresponding photosensitive unit.

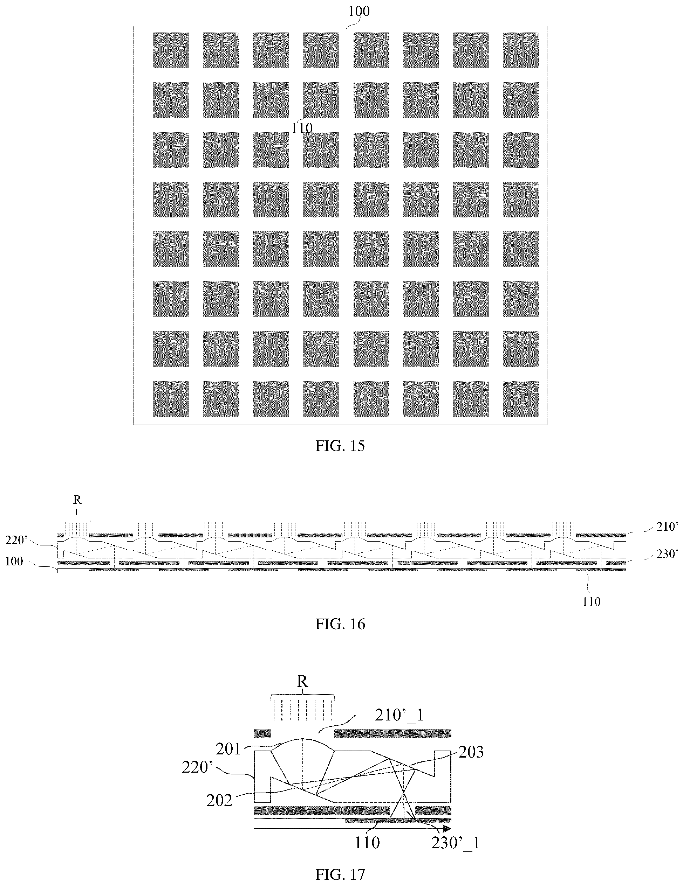

Referring to FIG. 16, in some embodiments, the light transmission layer 200 is multi-layered, and includes a third light blocking plate 210', a third light guide plate 220', and a fourth light blocking plate 230' which are arranged in order from the bottom of the display screen body towards the image sensor 100. For each of the optical transmission paths, an opening is provided in the third light blocking plate 210'; the collimating element and the second reflective element are formed on a side of the third light guide plate 220' close to the third light blocking plate 210', there is a spacing between the collimating element and the second reflective element, and the collimating element is located at a position corresponding to the opening of the third light blocking plate 210'; the first reflective element is formed on a side of the third light guide plate 220' close to the fourth light blocking plate 230', at a position corresponding to the collimating element; and an opening is provided in the fourth light blocking plate 240' at a position corresponding to the second reflective element, and the opening of the fourth light blocking plate is aligned with the corresponding photosensitive unit.

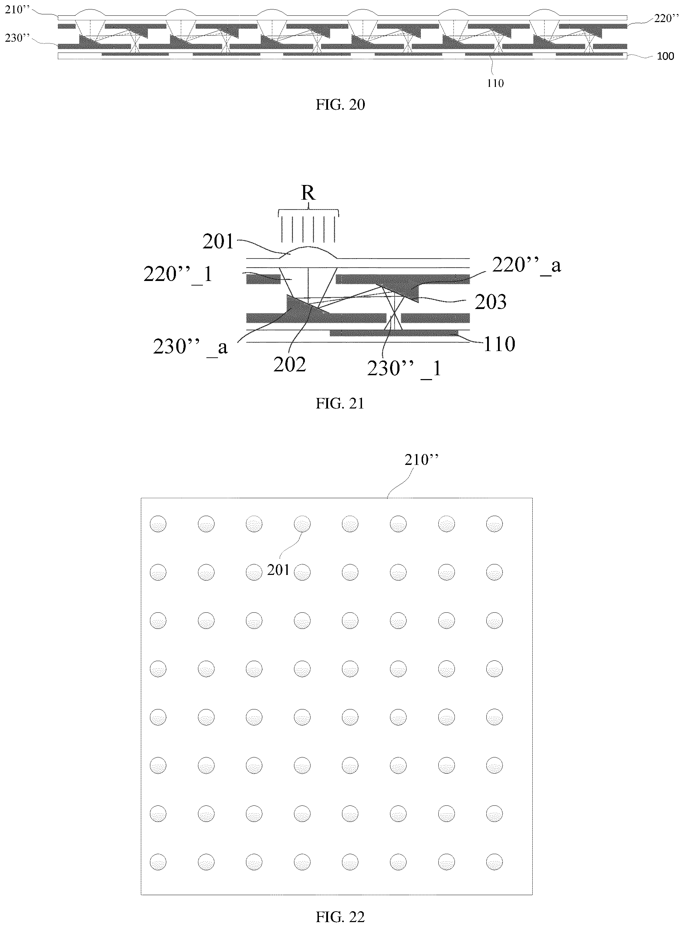

Referring to FIG. 20, in some embodiments, the light transmission layer 200 may be multi-layered, and include a fourth light guide plate 210", a fifth light blocking plate 220", and a sixth light blocking plate 230" which are arranged in order from the bottom of the display screen body towards the image sensor 100. For each of the optical transmission paths, the collimating element is formed on a side of the fourth light guide plate 210" close to the display screen body; an opening is provided in the fifth light blocking plate 220" at a position corresponding to the collimating element, and the second reflective element is formed on a side of the fifth light blocking plate 220" close to the sixth light blocking plate 230"; and the first reflective element is formed on a side of the sixth light blocking plate 230" close to the fifth light blocking plate 220", at a position corresponding to the opening of the fifth light blocking plate 220", and an opening is provided in the sixth light blocking plate at a position corresponding to the second reflective element.

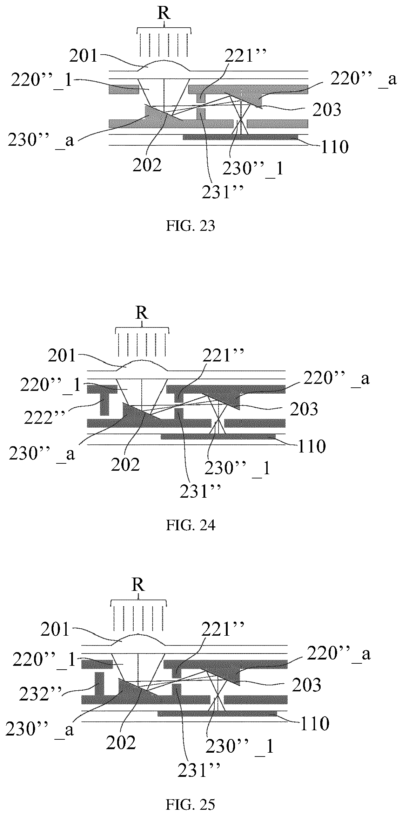

Referring to FIG. 23, in some embodiments, for each of the optical transmission paths, on the side of the fifth light blocking plate 220" close to the sixth light blocking plate, a first protrusion 221" is provided between an edge of the opening and the second reflective element; and on the side of the sixth light blocking plate 230" close to the fifth light blocking plate 220", a second protrusion 231" is provided at a position corresponding to the first protrusion 221". There is a gap between the first protrusion 221" and the second protrusion 231" to define a light transmission port that allows the light to pass through.

In some embodiments, for each of the optical transmission paths, a third protrusion is provided on the side of the fifth light blocking plate 220" close to the sixth light blocking plate 230", and the third protrusion is configured to isolate light in adjacent optical transmission paths.

In some embodiments, the third protrusion 232" extends to a surface of the sixth light blocking plate 230" and surrounds the first reflective element 202 and the second reflective element 203.

In some embodiments, for each of the optical transmission paths, a third protrusion 232" is provided on the side of the sixth light blocking plate 230" close to the fifth light blocking plate 220", and the third protrusion is configured to isolate the light in adjacent optical transmission paths.

In some embodiments, the third protrusion 232" extends to a surface of the fifth light blocking plate 220" and surrounds the first reflective element 202 and the second reflective element 203.

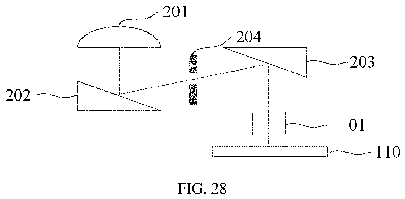

Referring to FIG. 28, in some embodiments, for each of the optical transmission paths, a first light-blocking structure is provided between the first reflective element 202 and the second reflective element 203, and the first light-blocking structure has a light transmission port that allows the light to pass through. The light transmission port is located on a connecting line between the first reflective element 202 and the second reflective element 203, and is configured to allow the light propagated between the first reflective element 202 and the second reflective element 203 to pass through, and an aperture of the light transmission port is smaller than an aperture of each of the two reflective surfaces.

In some embodiments, a second light-blocking structure is provided between two adjacent optical transmission paths. The second light-blocking structure is configured to isolate the light in two adjacent optical transmission paths.

In some embodiments, the aperture of the light outlet is smaller than the aperture of the corresponding photosensitive unit.

The embodiments of the disclosure also provide a display screen assembly. The display screen assembly includes an under-screen optical fingerprint module and a display screen body disposed above the under-screen optical fingerprint module. The under-screen optical fingerprint module includes an image sensor 100 and a light transmission layer 200. The image sensor 100 has a plurality of photosensitive units. The light transmission layer 200 is located under the display screen body and covers the image sensor 100. The light transmission layer 200 is provided with optical transmission paths each corresponding to one of the photosensitive units. Each of the optical transmission paths is provided with a collimating element and a light outlet. The light transmitted through the display screen body enters the optical transmission paths through the collimating elements, travels to the light outlet along the optical transmission paths, and is incident, from the light outlets, on the corresponding photosensitive units.

In some embodiments, each of the optical transmission paths is provided with at least two reflective elements. The light transmitted through the display screen body enters each of the optical transmission paths through the respective collimating element, and is reflected by the at least two reflective elements to the respective light outlet, and then is incident, from the light outlet, on the corresponding photosensitive unit. A propagation direction of the light between two adjacent reflective elements is at an angle with respect to an optical axis of the collimating element.

Referring to FIG. 7, in some embodiments, the at least two reflective elements of each of the optical transmission paths include a first reflective element 202 and a second reflective element 203, and a reflective surface of the first reflective element and a reflective surface of the second reflective element are arranged opposite to each other. The first reflective element 202 is arranged on the optical axis of the collimating element 201, and the reflective surface of the first reflective element 202 faces a light-emitting surface of the collimating element 201. The reflective surface of the first reflective element 202 is at an angle with respect to the optical axis. The second reflective element 203 is arranged at an axis perpendicular to a plane where the light outlet is located.

Referring to FIG. 8 , in some embodiments, the light transmission layer 200 is multi-layered, and includes a first light blocking plate 210, a first light guide plate 220, a second light guide plate 230 and a second light blocking plate 240 which are arranged in order from the bottom of the display screen body towards the image sensor 100. For each of the optical transmission paths, an opening is provided in the first light blocking plate 210; the collimating element is formed on a side of the first light guide plate 220 close to the first light blocking plate 210, at a position corresponding to the opening of the first light blocking plate 210, the second reflective element is formed on a side of the first light guide plate close to the second light guide plate 220, and the second reflective element is staggered from the collimating element; the first reflective element is formed on a side of the second light guide plate 230 close to the first light blocking plate 210, at a position corresponding to the collimating element, and an opening is provided in the second light guide plate at a position corresponding to the second reflective element; and an opening is provided in the second light blocking plate 240 at a position corresponding to the opening of the second light guide plate 230, and the opening of the second light blocking plate 240 is aligned with the corresponding photosensitive unit.

Referring to FIG. 28, in some embodiments, for each of the optical transmission paths, a first light-blocking structure is provided between the first reflective element 202 and the second reflective element 203, and the first light-blocking structure has a light transmission port that allows the light to pass through. The light transmission port is located on a connecting line between the first reflective element 202 and the second reflective element 203, and is configured to allow the light propagated between the first reflective element 202 and the second reflective element 203 to pass through, and an aperture of the light transmission port is smaller than an aperture of each of the two reflective surfaces.

The embodiments of the disclosure also provide an electronic device. The electronic device includes the display screen assembly described in the above embodiments and a housing. The housing includes a bottom plate and side walls arranged on the bottom plate, and a receiving space is defined by the bottom plate and the side walls. The display screen body of the display screen assembly is provided at a top of the housing opposite to the bottom plate. The under-screen optical fingerprint module of the display screen assembly is arranged in the receiving space.

The under-screen optical fingerprint module of the embodiments of the disclosure does not use a large-sized optical lens as shown in FIG. 1, but directly projects the fingerprint image onto the image sensor in a ratio of 1:1. The under-screen optical fingerprint module adopts the light transmission layer located under the display screen body, to reduce the crosstalk between adjacent pixels of the image sensor. In addition, with the light transmission layer, the light incident on the under-screen optical fingerprint module is converged and shaped, to improve the collimation characteristics of the optical fingerprint module. Further, the length of the optical path in Z-direction is also reduced, thereby reducing the overall thickness of the under-screen optical fingerprint module in the Z-direction. This enables the space of the terminal occupied by the module to be small, so that the module can be utilized in large areas in the electronic device, meeting the current requirements of large-area fingerprint unlocking.

The under-screen optical fingerprint module, display screen assembly, and electronic device provided by the embodiments of the disclosure are described below with reference to the drawings. Before specifically describing the embodiments of the disclosure, technical terms commonly used in the disclosure are introduced first, for ease of understanding.

Under-screen optical fingerprint refers to the technology of sensing the fingerprint by utilizing optical principles in the case where the fingerprint sensor is placed under the display screen body.

Shadow refers to a phenomenon that a reduced brightness is observed at the edges of an image.

Collimation refers to maintaining the parallel state of light.

The collimating element, or collimating layer or collimating array, is a device that shapes light from various points of the aperture diaphragm into a parallel collimated beam. The type of the collimating element depends on the requirements on aberration. For those with low requirements on aberration, the collimating element may be a simple single-piece lens, such as a plano-convex lens or a biconvex lens, which allows a large relative aperture. For those of high requirements on aberration, the collimating element may be a doublet lens, and the relative aperture is also appropriately reduced.

FIG. 4 is a schematic structural diagram of the under-screen optical fingerprint module provided by a first embodiment of the disclosure.

The under-screen optical fingerprint module of the embodiments of the disclosure may be arranged under the display screen body of the electronic device or on the back of the display screen body, so as to realize the function of under-screen optical fingerprint identification.

The electronic device may be a mobile phone, a tablet computer, a personal digital assistant, a wearable device, a vehicle-mounted device, and other hardware devices with various operating systems, touch screens and/or display screens.

As shown in FIG. 4, the under-screen optical fingerprint module may include an image sensor 100 and a light transmission layer 200.

The image sensor 100 has a plurality of photosensitive units.

The light transmission layer 200 is located below the display screen body and covers the image sensor. The light transmission layer is provided with optical transmission paths each corresponding to one of the photosensitive units. Each of the optical transmission paths is provided with a collimating element and a light outlet.

The light transmitted through the display screen body enters the optical transmission paths through the collimating elements, travels to the light outlets along the optical transmission paths, and is incident, from the light outlets, on the corresponding photosensitive units.

In the embodiments of the disclosure, the collimating element can keep the light being in a parallel state, so that the light transmitted through the display screen body can maintain the collimation characteristics after passing through the collimating element. As such, the collimated light enters the optical transmission paths, travels to the light outlets along the optical transmission paths, and is incident, from the light outlets, on the corresponding photosensitive units. In this way, the crosstalk between adjacent photosensitive units of the image sensor can be reduced, and the clarity of the fingerprint image can be improved.

That is to say, the light entering each optical transmission path through the respective collimating element can be parallel to the optical axis of the collimating element and maintain the collimation characteristics. Thus, the incoming light in other directions can be attenuated. This makes it possible to reduce the crosstalk between adjacent photosensitive units and improve the clarity of the fingerprint image. In addition, since only the collimated light passes through the light outlets, and the stray light and interfering light are blocked, the crosstalk between adjacent photosensitive units can be further reduced, and the clarity of the fingerprint image can be further improved.

As an example, referring to FIG. 5, a schematic structural diagram of an electronic device in the embodiments of the disclosure is illustrated. A front surface 60_1 of the display screen body 60 is configured for display, and the under-screen optical fingerprint module 40 may be placed on the back side of the display screen body 60 of the electronic device. As shown in FIG. 6, the display screen body 60 of the electronic device may be composed of a glass cover 61 and a display panel 62. The glass cover 61 plays a role in protecting the display screen body 60. The display panel 62 is located under the glass cover 61 and provides the display function of the display screen body 60. First, the light emitted upward from the display panel 62 is reflected at the interface between the finger F and the glass cover 61. Since the refractive index of the finger F is similar to that of glass and the refractive index of air is much smaller than that of glass, the reflected light obtained at the valleys in the fingerprint have a relatively high intensity, the reflected light obtained at the ridges in the fingerprint have a relatively small light intensity. Thus, the downward reflected light as a whole carries the fingerprint signal. Subsequently, the reflected light passes through the display panel 62 and reaches the collimating elements of the under-screen optical fingerprint module 40, and the light entering each optical transmission path through the collimating element can be parallel to the optical axis of the collimating element. Thus, the incoming light in other directions can be attenuated, and the crosstalk between the adjacent photosensitive units 110 of the image sensor 100 can be reduced, and the clarity of the fingerprint image can be improved.

The under-screen optical fingerprint module of the embodiments of the disclosure is provided with an image sensor and a light transmission layer. The image sensor has a plurality of photosensitive units. The light transmission layer is located under the display screen body and covers the image sensor. The light transmission layer is provided with optical transmission paths each corresponding to one of the photosensitive units. Each of the optical transmission paths is provided with a collimating element and a light outlet. In this disclosure, the collimating element can keep the light being in the parallel state, so that the light transmitted through the display screen body can maintain the collimation characteristics after passing through the collimating element. As such, the collimated light enters the optical transmission paths, travels to the light outlets along the optical transmission paths, and is incident, from the light outlets, on the corresponding photosensitive units. In this way, the crosstalk between adjacent photosensitive units of the image sensor can be reduced, and the clarity of the fingerprint image can be improved.

As a possible implementation, each optical transmission path may also be provided with at least two reflective elements. The light transmitted through the display screen body enters each optical transmission path through the respective collimating element, and after being reflected by the at least two reflective elements, it travels to the respective light outlet, and then is incident, from the light outlet, to the corresponding photosensitive unit. A propagation direction of the light between two adjacent reflective elements is at an angle with respect to an optical axis of the collimating element, that is, there is an included angle between the optical axis of the collimating element and the propagation direction of the light between two adjacent reflective elements.

For example, in a case where each of the optical transmission paths is provided with two reflective elements, referring to FIG. 7, a first schematic structural diagram of the optical transmission path in the embodiments of the disclosure is shown. The two reflective elements include a first reflective element 202 and a second reflective element 203 with reflective surfaces thereof arranged opposite to each other. The first reflective element 202 is arranged on the optical axis of the collimating element 201, and the reflective surface of the first reflective element 202 faces the light-emitting surface of the collimating element 201. The reflective surface of the first reflective element 202 is at an angle with respect to the optical axis of the collimating element 201, that is, an included angle is formed between the reflective surface of the first reflective element 202 and the optical axis of the collimating element 201. The second reflective element 203 is arranged on an axis perpendicular to a plane where the light outlet is located. FIG. 7 is illustrated by taking a case where the collimating element is a convex lens as an example.

As can be seen from FIG. 7, the collimating element 201, such as the convex lens, can converge the light, so that the energy of the light is more concentrated, which is beneficial for the subsequent reflection and shaping of the light in the optical transmission path. The light entering the optical transmission path through the collimating element is reflected for the first time by the first reflective element 202, the reflected light is reflected for the second time by the second reflective element 203. The light outlet 01 only allows the converged and shaped light to pass, and blocks the stray light and interfering light, to reduce the crosstalk between adjacent photosensitive units 110 and improve the clarity of the fingerprint image.

As a possible implementation, referring to FIG. 8, on the basis of the above embodiments, the light transmission layer 200 may be multi-layered, and include a first light blocking plate 210, a first light guide plate 220, a second light guide plate 230 and a second light blocking plate 240 which are arranged in order from the bottom of the display screen body towards the image sensor 100.

For each of the optical transmission paths, an opening is provided in the first light blocking plate 210.

In the embodiments of the disclosure, the positions of the openings in the first light blocking plate 210 correspond to the positions of the fingerprint signal sampling points. The shapes of the openings may be a circle, a square, a diamond or other shapes, which is not limited in the disclosure.

For each of the optical transmission paths, the collimating element is formed on a side of the first light guide plate 220 close to the first light blocking plate 210, at a position correspond to the opening of the first light blocking plate 210; the second reflective element is formed on a side of the first light guide plate 220 close to the second light guide plate 230; and the second reflective element is staggered from the collimating element.

It should be noted that, FIG. 8 is illustrated by taking a case where the collimating element is a convex lens as an example.

For each of the optical transmission paths, the first reflective element is formed on a side of the second light guide plate 230 close to the first light blocking plate 210, at a position corresponding to the collimating element; and an opening is provided in the second light guide plate at a position corresponding to the second reflective element.

For each of the optical transmission paths, an opening is provided in the second light blocking plate 240, at a position corresponding to the opening of the second light guide plate 230, and the opening of the second light blocking plate 240 is aligned with the corresponding photosensitive unit 110.

In the embodiments of the disclosure, for each of the optical transmission paths, the light R can pass through the opening of the first light blocking plate 210, that is, the first light blocking plate 210 is configured to filter the light for the first time. The light R passing through the opening can enter the lower structure, but the interfering light at other positions than the opening is blocked. The first light guide plate 220 and the second light guide plate 230 work together to guide the light, and make the light converged and shaped in the optical transmission path. The second light blocking plate 240 is configured to filter the light for the second time, in such a manner that the stray light and interfering light are blocked, and only the light that has been converged and shaped by the first light guide plate 220 and the second light guide plate 230 is allowed to pass. The image sensor 100 is configured for fingerprint imaging. Each photosensitive unit 110 receives the corresponding light that passes through the first light blocking plate 210, the first light guide plate 220, the second light guide plate 230 and the second light blocking plate 240, and performs photoelectric conversion on it to obtain a fingerprint image.

Specifically, the light transmitted through the display screen body reaches the first light blocking plate 210, and the openings in the first light blocking plate 210 allow the light R at the fingerprint signal sampling points to pass through, and the first light blocking plate blocks the interfering light and stray light at other positions. In each optical transmission path, the light R passing through the first light blocking plate 210 is converged by the collimating element of the first light guide plate 220, which can make the energy of the light passing through the first light blocking plate 210 more concentrated, and facilitate the subsequent reflection and shaping of the light in the optical transmission path. After passing through the collimating element of the first light guide plate 220, the light R is incident on the first reflective element of the second light guide plate 230, and is reflected by the first reflective element for the first time. The reflected light is incident on the second reflective element of the first light guide plate 220, and is reflected by the second reflective element for the second time. The light reflected by the second reflective element of the first light guide plate 220 passes through the opening of the second light guide plate 230 and the opening of the second light blocking plate 240, to reach the corresponding photosensitive unit 110 below. The second light blocking plate 240 is configured to allow only the light that has been converged and shaped by the first light guide plate 220 and the second light guide plate 240 to pass through, and block the stray light and interfering light that are generated during the convergence and shaping process of the light by the first light guide plate 220 and the second light guide plate 240, to reduce the crosstalk between adjacent photosensitive units.

The enlarged cross-sectional view of each optical transmission path in FIG. 8 is shown in FIG. 9. The (central axis of) opening 210_1 of the first light blocking plate 210 is aligned with (the central axis of) the collimating element 201 of the first light guide plate 220, so that the central axis of the light passing through the opening 210_1 of the light blocking plate 210 is aligned with the optical axis of the collimating element 201 of the first light guide plate 220. The relative positions of adjacent two of the collimating element 201 of the first light guide plate 220, the first reflective element 202 of the second light guide plate 230, the second reflective element 203 of the first light guide plate 220, the opening 230_1 of the second light guide plate 230 and the opening 240_1 of the second light blocking plate 210 are aligned, so that the optical axis of the light reflected by the first reflective element of the second light guide plate 230 and the second reflective element of the first light guide plate 220 is aligned with the central axis of the opening 230_1 of the second light guide plate 230 and the central axis of the opening 240_1 of the second light blocking plate 240. It should be noted that, for the opening 240_1 of the second light guide plate 240 and the opening 240_1 of the second light blocking plate 240, only their central axes are required to be aligned with each other in the disclosure, and the shapes and relative sizes thereof are not limited.

As an example, the shapes of the first reflective element 202 of the second light guide plate 230 and the second reflective element 203 of the first light guide plate 220 are shown in FIG. 10. However, in practical applications, the shapes of the first reflective element 202 and the second reflective element 203 are not limited, and only the relative positions of adjacent two of the collimating element of the first light guide plate 220, the first reflective element of the second light guide plate 230, the second reflective element of the first light guide plate 220, the opening of the second light guide plate 230 and the opening of the second light blocking plate 240 for each optical transmission path shown in FIG. 8 and FIG. 9 are required to be aligned.

In FIG. 8 and FIG. 9, the collimating element, the first reflective element and the second reflective element, as well as the opening of the first light blocking plate and the opening of the second light blocking plate are designed to cooperate, to enable the light convergence of the light transmitted through the display screen body and the folding of the optical path. The light convergence can provide a collimation-like effect, so that the optical transmission path can only receive the light parallel to the optical axis of the collimating element, and the incoming light in other directions is attenuated, reducing the crosstalk between adjacent optical transmission paths and improving the clarity of the fingerprint image. In addition, the folded optical path enables the length of the optical path in Z-direction of the under-screen optical fingerprint module to be reduced, the overall thickness of the module to be reduced, and the internal space (battery space) of the electronic device not to be occupied, so that the module can be utilized in large areas in the electronic device, meeting the current requirements of large-area fingerprint unlocking.

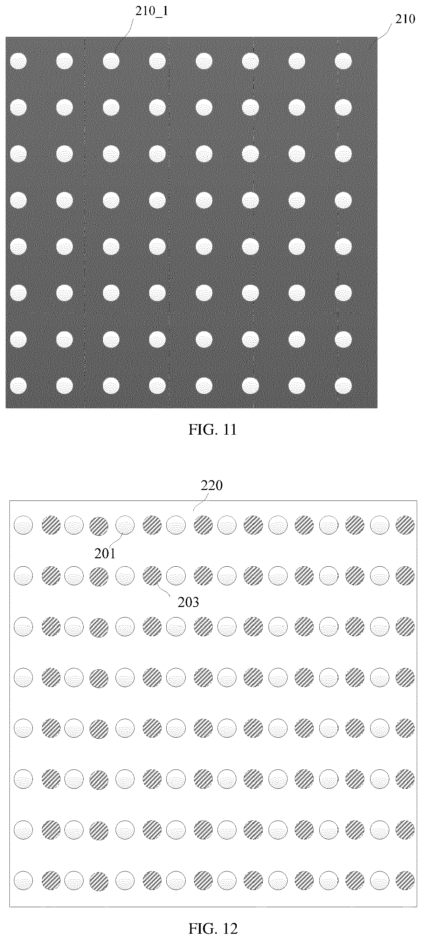

As an example, planar features of the first light blocking plate 210, the first light guide plate 220, the second light guide plate 230, the second light blocking plate 240 and the image sensor 100 are shown in schematic diagrams of FIG. 11 to FIG. 15, respectively. As shown in FIG. 11, the whole first light blocking plate 210 is made of an opaque (or light-absorbing) material, and holes or openings 210_1 are only provided at positions corresponding to the fingerprint signal sampling points to allow the light to pass through. FIG. 10 only takes a case where the openings 210_1 are circular as an example. In practical application, the disclosure does not limit the shapes of the openings 210_1 of the first light blocking plate 210.

As shown in FIG. 12, the whole first light guide plate 220 is made of a light-transmitting medium, and is provided with the structures of the collimating elements 201 and the second reflective elements 203 at their corresponding positions. The circles in the solid line represent the structures of the collimating elements 201 on the front of the first light guide plate 220, but the shapes of the collimating elements 201 are not limited here. The collimating element may be a circular convex lens, a square convex lens, or a convex lens in other shapes. The circles in dashed line and filled with oblique lines represent the structures of the second reflective element surface 203 on the back of the first light guide plate 220, and the shapes of the second reflective elements 203 are not limited here.

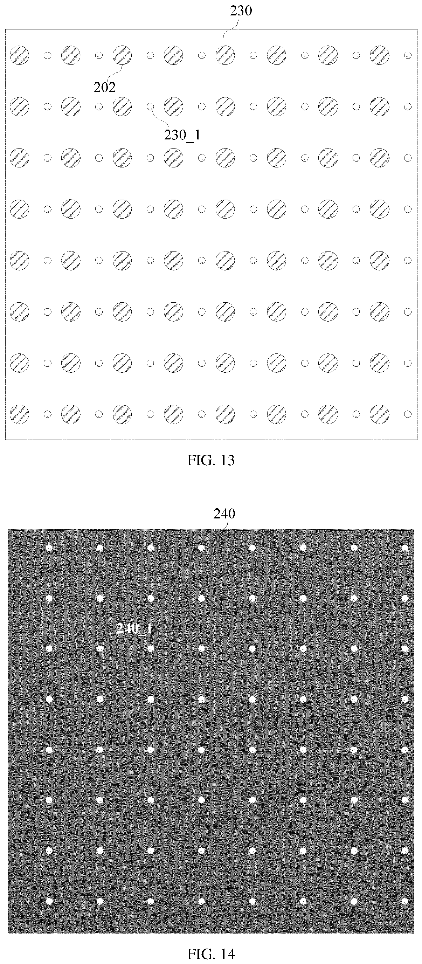

As shown in FIG. 13, the whole second light guide plate 230 is made of a light-transmitting medium, and is provided with the structures of the first reflective elements 202 of the second light guide plate 230 and the openings 230_1 of the second light guide plate at their corresponding positions. The circles in solid line and filled with oblique lines represent the structures of the first reflective elements 202 on the front of the second light guide plate 230. The shapes of the first reflective elements 202 are not limited here, and only the relative positions of adjacent two of the collimating element 201 of the first light guide plate 220, the first reflective element 202 of the second light guide plate 230, the second reflective element 203 of the first light guide plate 220, the opening 230_1 of the second light guide plate 230 and the opening 240_1 of the second light blocking plate 240 for each optical transmission path are required to be aligned in the disclosure. The circles in the solid line represent the structures of the openings 230_1 of the second light guide plate 230, and the shapes of these openings are not limited here, and only the relative positions of adjacent two of the collimating element 201, the first reflective element 202, the second reflective element 203, the opening 230_1 of the second light guide plate 230 and the opening 240_1 of the second light blocking plate 240 for each optical transmission path are required to be aligned.

As shown in FIG. 14, the whole second light blocking plate 240 is made of an opaque (or light-absorbing) material, and the openings 240_1 are only provided at corresponding positions to allow the light to pass through. The position of each opening 240_1 is determined by the relative positions of the collimating element 201 of the first light guide plate 220, the first reflective element 202 of the second light guide plate 240, the second reflective element 203 of the first light guide plate 220, the opening 230_1 of the second light guide plate 230 and the opening 240_1 of the second light blocking plate 240, and the shapes of the openings 240_1 of the second light blocking plate 240 are not limited here.

As shown in FIG. 15, the gray squares represent the structures of the photosensitive units 110 of the image sensor 100. One optical transmission path shown in FIG. 8 corresponds to one photosensitive unit 110. The size of the photosensitive unit 110 may be larger than the size of the opening 240_1 of the second light blocking plate 240, to fully collect the optical signal and improve the quality of the fingerprint image. It should be noted that the shapes of the photosensitive units 110 of the image sensor 100 are not limited in the disclosure.

It should be noted that, in the related art, the under-screen optical fingerprint-type terminal as shown in FIG. 1 has a problem that the module is relatively thick, that is, the distance L from the bottom of the module to the bottom of the display screen in FIG. 1 is relatively large. Specifically, since the existing under-screen optical fingerprint-type terminal adopts a CMOS camera module (which is called CCM for short) structure, the optical lens 22 in the module needs to keep a certain object distance from the bottom of the terminal display screen body 10 and keep a certain image distance from the top of the image sensor 23 to meet the optical imaging requirements, which makes it necessary to maintain a certain distance between the bottom of the under-screen optical fingerprint module and the bottom of the display panel 12, so that the existing under-screen optical fingerprint-type terminal has a large size in the Z direction (the Z direction is defined as shown in FIG. 2, which means an outward direction perpendicular to the terminal display screen body). The large size in the Z direction would cause the battery space of the terminal using this technology to be reduced, resulting in a reduced battery capacity and a poor battery life of the terminal, which goes against the current user demand for long battery life of the terminal.

However, the disclosure adopts the under-screen optical fingerprint module having the structure as shown in FIG. 8 and FIG. 9, in which the under-screen optical fingerprint module performs the optical imaging with a magnification ratio of 1:1, and does not need to use the large-sized optical lens of the existing structure. Compared with the existing structure, the overall size of the under-screen optical fingerprint module is smaller. The under-screen optical fingerprint module uses two light blocking plates to filter out the stray light and interfering light, which enables the crosstalk between the adjacent photosensitive units of the image sensor to be reduced. The light incident on the under-screen optical fingerprint module is converged and shaped by the two light guide plates, which improves the collimation characteristics of the under-screen optical fingerprint module, and reduces the length of the optical path in the Z-direction, thereby reducing the thickness of the under-screen optical fingerprint module in the Z-direction. This makes the space occupied by the under-screen optical fingerprint module smaller, so that the module can be utilized in large areas.

That is to say, in this disclosure, the under-screen optical fingerprint module adopts the first light blocking plate, the first light guide plate, the second light guide plate and the second light blocking plate to enable the light convergence and the folding of the optical transmission path. In this way, a collimation-like effect is provided, so that the optical transmission path can only receive the light parallel to the optical axis of the collimating element, and the incoming light in other directions is attenuated, reducing the crosstalk between adjacent optical transmission paths and improving the clarity of the fingerprint image. In addition, the folded optical path enables the length of the optical path in the Z-direction of the under-screen optical fingerprint module to be reduced, the overall thickness of the module to be reduced, and the overall size of the under-screen optical fingerprint module is lighter and thinner, so that the module is suitable for being utilized in large areas in the electronic device, meeting the current requirements of large-area fingerprint unlocking.

As another possible implementation, referring to FIG. 16, on the basis of the above-mentioned embodiments shown in FIG. 4 to FIG. 7, the light transmission layer 200 may be multi-layered, and include a third light blocking plate 210', a third light guide plate 220' and a fourth light blocking plate 230' which are arranged in order from the bottom of the display screen body towards the image sensor 100.

For each of the optical transmission paths, an opening is provided in the third light blocking plate 210'.

In the embodiments of the disclosure, the positions of the openings in the third light blocking plate 210' correspond to the positions of the fingerprint signal sampling points. The shapes of the openings may be a circle, a square, a diamond or other shapes, which is not limited in the disclosure.

For each of the optical transmission paths, the collimating element and the second reflective element are formed on a side of the third light guide plate 220' close to the third light blocking plate 210', there is a gap between the collimating element and the second reflective element, and the collimating elements is located at a position corresponding to the opening of the three light blocking plates 210'.

It should be noted that FIG. 16 is illustrated by taking a case where the collimating element is a convex lens as an example.

For each of the optical transmission paths, the first reflective element is formed on a side of the third light guide plate 220' close to the fourth light blocking plate 230', at a position corresponding to the collimating element.

For each of the optical transmission paths, an opening is provided in the fourth light blocking plate 230' at a position corresponding to the second reflective element, and the opening of the fourth light blocking plate is aligned with the corresponding photosensitive unit.

Different from FIG. 8, in this embodiment, the microstructures (the collimating element, first reflective element and second reflective element) on the first light guide plate 220 and the second light guide plate 230 are made in the same light guide plate, which is referred to as the third light guide plate 220' in this embodiment. As shown in FIG. 16, on the side of the third light guide plate 220' close to the third light blocking plate 210', that is, on the front of the third light guide plate 220', the structures of the collimating elements and the second reflective elements are formed. On the side of the third light guide plate 220' close to the fourth light blocking plate 230', that is, on the back of the third light guide plate 220', the structures of the first reflective elements are formed. The third light blocking plate 210' has the same structure as the first light blocking plate 210 in FIG. 8, the fourth light blocking plate 230' has the same structure as the second light blocking plate 240, and the realization principles thereof are similar, which will not be repeated here. The enlarged cross-sectional view of each optical transmission path in FIG. 16 is shown in FIG. 17.

As shown in FIG. 16 and FIG. 17, the light transmitted through the display screen body passes through the opening 210'_1 in the third light blocking plate 210' and then reaches the collimating elements 201 on the third light guide plate 220'. In each optical transmission path, the light R is converged by the collimating element 201 and is then reflected by the first reflective element 202 of the third light guide plate 220', and the reflected light is reflected by the second reflective element 203 of the third light guide plate 220' for the second time. The light reflected by the second reflective element 203 of the third light guide plate 220' travels downward and passes through the opening 230'_1 of the fourth light blocking plate 230' to reach the photosensitive unit 110 of the image sensor 100, such that photoelectric conversion is performed to obtain a fingerprint image.

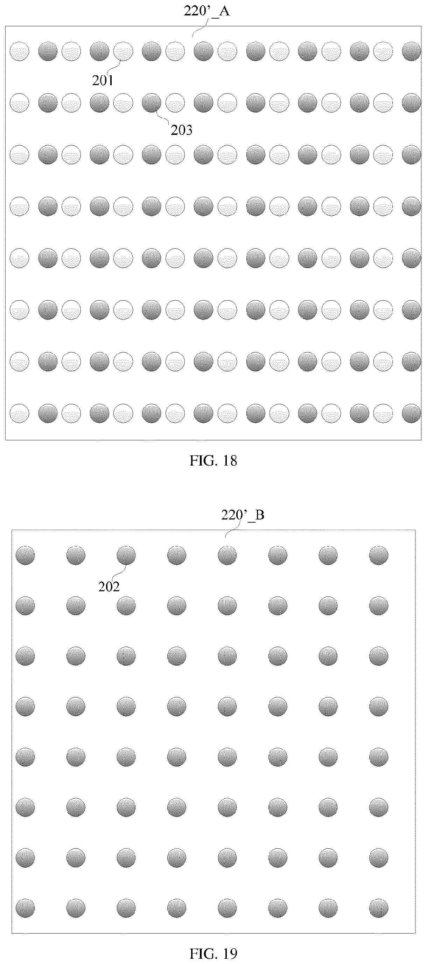

As an example, the plan view of the side of the third light guide plate 220' close to the third light blocking plate 210', that is, the front side 220'_A of the third light guide plate 220' is shown in FIG. 18, in which two kinds of features, i.e., the collimating elements 201 and the second reflective elements 203 are provided. The plan view of the side of the third light guide plate 220' close to the fourth light blocking plate 230', that is, the back side 220'_B of the third light guide plate 220' is shown in FIG. 19, in which one kind of features, i.e., the first reflective elements 202 are provided.

In the embodiments of the disclosure, the under-screen optical fingerprint module having the structure as shown in FIG. 16 and FIG. 17 is adopted. The under-screen optical fingerprint module uses two light blocking plates to filter out the stray light and interfering light, which enables the crosstalk between the adjacent photosensitive units of the image sensor to be reduced. The light incident on the under-screen optical fingerprint module is converged and shaped by one light guide plate, which improves the collimation characteristics of the under-screen optical fingerprint module, and reduces the length of the optical path in the Z-direction, thereby reducing the thickness of the under-screen optical fingerprint module in the Z-direction. This makes the space occupied by the under-screen optical fingerprint module smaller, so that the module can be utilized in large areas.

That is to say, in this disclosure, the under-screen optical fingerprint module adopts the third light blocking plate, the third light guide plate and the fourth light blocking plate to enable the light convergence and the folding of the optical transmission path. In this way, a collimation-like effect is provided, so that the optical transmission path can only receive the light parallel to the optical axis of the collimating element, and the incoming light in other directions is attenuated, reducing the crosstalk between adjacent optical transmission paths and improving the clarity of the fingerprint image. In addition, the folded optical path enables the length of the optical path in the Z-direction of the under-screen optical fingerprint module to be reduced, the overall thickness of the under-screen optical fingerprint module to be reduced, and the overall size of the under-screen optical fingerprint module is lighter and thinner, so that the module is suitable for being utilized in large areas in the electronic device, meeting the current requirements of large-area fingerprint unlocking.

As another possible implementation, referring to FIG. 20, on the basis of the above-mentioned embodiments shown in FIG. 4 to FIG. 7, the light transmission layer 200 may be multi-layered, and include a fourth light guide plate 210", a fifth light blocking plate 220" and a sixth light blocking plate 230" which are arranged in order from the bottom of the display screen body towards the image sensor 100.

For each of the optical transmission paths, the collimating element is formed on a side of the fourth light guide plate 210" close to the display screen body.

It should be noted that FIG. 20 is illustrated by taking a case where the collimating element is a convex lens as an example.

For each of the optical transmission paths, an opening is provided in the fifth light-blocking plate 220" at a position corresponding to the collimating element, and the second reflective element is formed on a side of the fifth light-blocking plate close to the sixth light-blocking plate 230".

For each of the optical transmission paths, the first reflective element is formed on a side of the sixth light blocking plate 230" close to the fifth light blocking plate 220", at a position corresponding to the opening of the fifth light blocking plate 220", and an opening is provided in the sixth light blocking plate at a position corresponding to the second reflective element.

Different from FIG. 8, in this embodiment, the structures of the collimating elements are independently formed on the light guide plate, which is denoted as the fourth light guide plate 210" in this disclosure. As shown in FIG. 20, a reflective coating is applied on the reflective bosses of the light blocking plates, so that the fifth light blocking plate 220" and the sixth light blocking plate 230" can not only enable the light blocking, but also enable the folding and shaping of the optical transmission path. The enlarged cross-sectional view of each optical transmission path in FIG. 20 is shown in FIG. 21.

As shown in FIG. 20 and FIG. 21, after the light transmitted through the display screen body is converged and shaped by the collimating element 201 of the fourth light guide plate 210", it is filtered for the first time through the opening 220"_1 of the fifth light blocking plate 220", to filter out the interfering light for adjacent photosensitive units. In each optical transmission path, the light R passes through the opening 220"_1 of the fifth light blocking plate 220" and is reflected for the first time by the first reflective element 202 on the reflective boss 230"_a of the sixth light blocking plate 230". The reflected light is reflected for the second time by the second reflective element 203 on the reflective boss 220"_a of the fifth light blocking plate 220". After being reflected by the second reflective element 203, the light passes through the opening 230"_1 of the sixth light blocking plate 230" and reaches the photosensitive unit 110 of the image sensor 100 below, such that photoelectric conversion is performed to obtain a fingerprint image.

As an example, the plan view of the fourth light guide plate 210" is shown in FIG. 22, in which one kind of features, i.e., the collimating elements 201 are provided.

In the embodiments of the disclosure, the second reflective element 203 of the fifth light blocking plate 220" and the first reflective element 202 of the sixth light blocking plate 230" can be respectively coated on the reflective bosses of the two light blocking plates, so that the light blocking plates can not only enable the light blocking, but also enable the folding and shaping of the optical transmission path.

As a possible implementation, in order to filter out the stray light generated in the first reflection, protrusions may be provided on the fifth light blocking plate 220" and the sixth light blocking plate 230". Specifically, referring to FIG. 23, on the basis of the embodiment shown in FIG. 21, on the side of the fifth light blocking plate 220" close to the sixth light blocking plate, a first protrusion 221" is provided between the edge of the opening of the fifth light blocking plate and the second reflective element for each optical transmission path.

On the side of the sixth light blocking plate 230" close to the fifth light blocking plate 220", a second protrusion 231" is disposed at a position corresponding to the first protrusion 221" for each optical transmission path.

There is a gap between the first protrusion 221" and the second protrusion 231" to define a light transmission port that allows the light to pass through.

In the embodiments of the disclosure, after the light transmitted through the display screen body is converged and shaped by the collimating elements of the fourth light guide plate 210", it is filtered for the first time through the openings of the fifth light blocking plate 220" to filter out the interfering light between adjacent photosensitive units. For each optical transmission path, the light passes through the opening 220"_1 of the fifth light blocking plate 220" and is reflected for the first time by the first reflective element 202 on the reflective boss 230"_a of the sixth light blocking plate 230". The reflected light passes through the light transmission port 230"_1 between the first protrusion 221" of the fifth light blocking plate 220" and the second protrusion 231" of the sixth light blocking plate 230", and then is reflected for the second time by the second reflective element 203 on the reflective boss 220"_a of the fifth light blocking plate 220". In this way, the shaped light can be filtered for the second time, and the stray light generated in the first reflection can be filtered out.

As another possible implementation, in order to isolation the light between adjacent photosensitive units and further reduce the crosstalk between adjacent photosensitive units, a third protrusion may be further provided on the fifth light blocking plate 220" or the sixth light blocking plate 230, and the third protrusion is configured to isolate the light in adjacent optical transmission paths.

As an example, referring to FIG. 24, on the basis of the embodiment shown in 23, a third protrusion 222" may also be provided on the side of the fifth light blocking plate 220" close to the sixth light blocking plate 230", and the third protrusion is configured to isolate the light in adjacent optical transmission paths. In this way, light isolation can be implemented for each photosensitive unit, and the crosstalk between adjacent photosensitive units can be further reduced.

Further, in order to avoid the crosstalk between adjacent photosensitive units and perform complete light isolation for each photosensitive unit, on the basis of the embodiment shown in FIG. 24, the third protrusion 222" may extend to the surface of the sixth light blocking plate 230" and surrounds the first reflective element 202 and the second reflective element 203.

As another example, referring to FIG. 25, on the basis of the embodiment shown in 23, a third protrusion 232" may be provided on the side of the sixth light blocking plate 230" close to the fifth light blocking plate 220", and the third protrusion is configured to isolate the light in adjacent optical transmission paths. In this way, the light isolation can be implemented for each photosensitive unit, and the crosstalk between adjacent photosensitive units can be further reduced.

Further, in order to avoid the crosstalk between adjacent photosensitive units and perform the complete light isolation for each photosensitive unit, on the basis of the embodiment shown in FIG. 25, the third protrusion may extend to the surface of the fifth light blocking plate 220"and surrounds the first reflective element 202 and the second reflective element 202.

In the embodiments of the disclosure, the combination of the protrusions and openings can minimize the interference between the photosensitive units, reduce the crosstalk between adjacent photosensitive units, and also improve the sensitivity of each photosensitive unit.

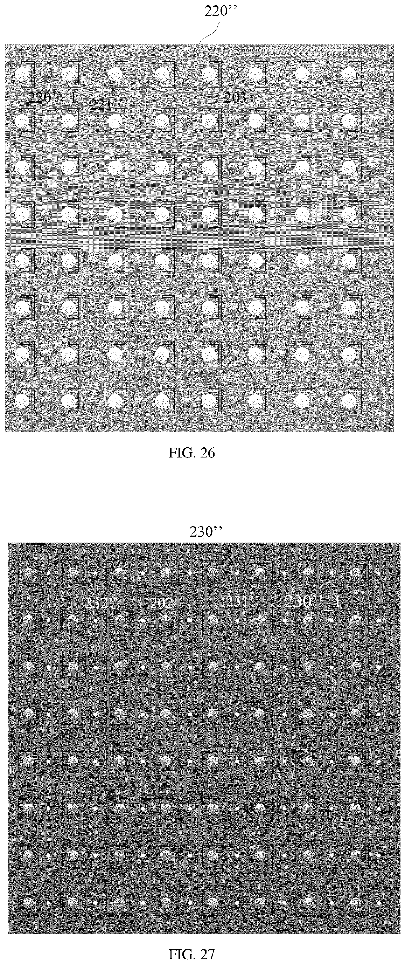

As an example, the plan view of the fifth light blocking plate 220" is shown in FIG. 26, and there are three kinds of features, i.e., the openings 220"_1, the first protrusions 221", and the second reflective elements 203.

As an example, the plan view of the sixth light blocking plate 230" is shown in FIG. 27, and there are four kinds of features, i.e., the second protrusions 231", the first reflective elements 202, the third protrusions 232", and the opening 230"_1.

As a possible implementation, on the basis of the embodiments shown in FIG. 4 to FIG. 7, a first light-blocking structure may be provided between the first reflective element 202 and the second reflective element 203 for each optical transmission path. The first light-blocking structure has a light transmission port that allows the light to pass through. The light transmission port is located on a connecting line between the first reflective element 202 and the second reflective element 203, and is configured to allow the light propagated between the first reflective element 202 and the second reflective element 203 to pass through. The aperture of the light transmission port is smaller than the aperture of each of the two reflective surfaces. Therefore, by arranging the first light-blocking structure, the shaped light can be filtered to filter out the stray light generated in the first reflection.

As an example, referring to FIG. 28, on the basis of the embodiment shown in FIG. 7, a first light-blocking structure 204 may be provided between the first reflective element 202 and the second reflective element 203. The small light transmission port of the first light-blocking structure 204 can filter out the stray light generated in the first reflection.

As a possible implementation, in order to reduce the crosstalk between adjacent photosensitive units, on the basis of the embodiment shown in FIG. 4, a second light-blocking structure may also be provided between two adjacent optical transmission paths, and the second light-blocking structure is configured to isolate the light in two adjacent optical transmission paths.

As a possible implementation, on the basis of the above-mentioned embodiments, the aperture of the light outlet in each optical transmission path may be smaller than the aperture of the corresponding photosensitive unit, so that the photosensitive unit with a larger aperture can fully collect the light signal, and the quality of the fingerprint image can be improved.

In order to realize the above embodiments, a display screen assembly is also provided. The display screen assembly may include the under-screen optical fingerprint module proposed in the foregoing embodiments, and a display screen body arranged above the under-screen optical fingerprint module.

It should be noted that the explanations of the under-screen optical fingerprint module in the foregoing embodiments are also applicable to the display screen assembly of this embodiment, and the implementation principles thereof are similar, which will not be repeated here.

In order to realize the above embodiments, an electronic device is also provided.

The electronic device according to the embodiments of the disclosure includes the display screen assembly proposed in the foregoing embodiment and a housing.

The housing includes a bottom plate and side walls arranged on the bottom plate, and a receiving space is defined by the bottom plate and the side walls. The display screen body of the display screen assembly is provided at the top of the housing opposite to the bottom plate, and the under-screen optical fingerprint module of the display screen assembly is arranged in the receiving space.

It should be noted that the explanations of the under-screen optical fingerprint module in the foregoing embodiments are also applicable to the electronic device of this embodiment, and the implementation principles thereof are similar, which will not be repeated here.

In the electronic device of the embodiments of the disclosure, an image sensor and a light transmission layer are provided. The image sensor has a plurality of photosensitive units. The light transmission layer is located under the display screen body and covers the image sensor. The light transmission layer is provided with optical transmission paths each corresponding to one of the photosensitive units. Each of the optical transmission paths is provided with a collimating element and a light outlet. In this disclosure, the collimating element can keep the light being in the parallel state, so that the light transmitted through the display screen body can maintain the collimation characteristics after passing through the collimating elements. As such, the collimated light enters the optical transmission paths, travels to the light outlets along the optical transmission paths, and is incident, from the light outlets, on the corresponding photosensitive units. In this way, the crosstalk between adjacent photosensitive units of the image sensor can be reduced, and the clarity of the fingerprint image can be improved.

In the description of this specification, description with reference to the terms "one embodiment", "some embodiments", "example", "specific example", or "some examples", etc., mean that specific features, structures, materials or characteristics described in connection with the embodiment or example are included in at least one embodiment or example of the disclosure. In this specification, schematic representations of the above terms are not necessarily directed to the same embodiment or example. Furthermore, the particular features, structures, materials or characteristics described may be combined in any suitable manner in any one or more embodiments or examples. Furthermore, those skilled in the art may combine the different embodiments or examples described in this specification, as well as combine the features of the different embodiments or examples, without conflicting each other.

In addition, the terms "firs" and "second" are only used for descriptive purposes, and should not be construed as indicating or implying relative importance or implying the number of indicated technical features. Thus, a feature delimited with "first", "second" may expressly or implicitly include at least one of such feature. In the description of the disclosure, "plurality" means at least two, such as two, three, etc., unless expressly and specifically defined otherwise.

In addition, the various functional units in the embodiments of the disclosure may be integrated into one processing module, or each unit may exist physically alone, or two or more units may be integrated into one module. The above-mentioned integrated modules can be implemented in hardware or software function modules. If the integrated modules are implemented in software functional modules and sold or used as independent products, they may also be stored in a computer-readable storage medium.

Although the embodiments of the disclosure have been shown and described above, it should be understood that the above embodiments are exemplary and should not be construed as limitations to the disclosure. Those of ordinary skill in the art can make changes, modifications, substitutions and variations to the embodiments within the scope of the disclosure.

## Claims

1. An under-screen optical fingerprint module, comprising:
an image sensor, having a plurality of photosensitive units; and
a light transmission layer, located under a display screen body and covering the image sensor, wherein the light transmission layer is provided with optical transmission paths each corresponding to one of the photosensitive units, and each of the optical transmission paths is provided with a collimating element and a light outlet;
light transmitted through the display screen body enters the optical transmission paths through the collimating elements, travels to the light outlets along the optical transmission paths, and is incident, from the light outlets, on the corresponding photosensitive units.

2. The under-screen optical fingerprint module as claimed in claim 1, wherein each of the optical transmission paths is provided with at least two reflective elements;
the light transmitted through the display screen body enters each of the optical transmission paths through the respective collimating element, and is reflected by the at least two reflective elements to the respective light outlet, and then is incident, from the light outlet, on the corresponding photosensitive unit; wherein a propagation direction of the light between two adjacent reflective elements is at an angle with respect to an optical axis of the collimating element.

3. The under-screen optical fingerprint module as claimed in claim 2, wherein the at least two reflective elements of each of the optical transmission paths comprise a first reflective element and a second reflective element, and a reflective surface of the first reflective element and a reflective surface of the second reflective element are arranged opposite to each other; and
wherein the first reflective element is arranged on the optical axis of the collimating element, the reflective surface of the first reflective element faces a light-emitting surface of the collimating element, and the reflective surface of the first reflective element is at an angle with respect to the optical axis; and
the second reflective element is arranged on an axis perpendicular to a plane where the light outlet is located.

4. The under-screen optical fingerprint module as claimed in claim 3, wherein the light transmission layer is multi-layered, and comprises a first light blocking plate, a first guide plate, a second light guide plate and a second light blocking plate which are arranged in order from a bottom of the display screen body towards the image sensor;
wherein for each of the optical transmission paths:
an opening is provided in the first light blocking plate;
the collimating element is formed on a side of the first light guide plate close to the first light blocking plate, at a position corresponding to the opening of the first light blocking plate, the second reflective element is formed on a side of the first light guide plate close to the second light guide plate, and the second reflective element is staggered from the collimating element;
the first reflective element is formed on a side of the second light guide plate close to the first light blocking plate, at a position corresponding to the collimating element, and an opening is provided in the second light guide plate at a position corresponding to the second reflective element; and
an opening is provided in the second light blocking plate at a position corresponding to the opening of the second light guide plate, and the opening of the second light blocking plate is aligned with the corresponding photosensitive unit.

5. The under-screen optical fingerprint module as claimed in claim 3, wherein the light transmission layer is multi-layered, and comprises a third light blocking plate, a third guide plate and a fourth light blocking plate which are arranged in order from a bottom of the display screen body towards the image sensor;
wherein for each of the optical transmission paths:
an opening is provided in the third light blocking plate;
the collimating element and the second reflective element are formed on a side of the third light guide plate close to the third light blocking plate, there is a spacing between the collimating element and the second reflective element, and the collimating element is located at a position corresponding to the opening of the third light blocking plate;
the first reflective element is formed on a side of the third light guide plate close to the fourth light blocking plate, at a position corresponding to the collimating element; and
an opening is provided in the fourth light blocking plate at a position corresponding to the second reflective element, and the opening of the fourth light blocking plate is aligned with the corresponding photosensitive unit.

6. The under-screen optical fingerprint module as claimed in claim 3, wherein the light transmission layer is multi-layered, and comprises a fourth light guide plate, a fifth blocking plate and a sixth light blocking plate which are arranged in order from a bottom of the display screen body towards the image sensor;
wherein for each of the optical transmission paths:
the collimating element is formed on a side of the fourth light guide plate close to the display screen body;
an opening is provided in the fifth light blocking plate at a position corresponding to the collimating element, and the second reflective element is formed on a side of the fifth light blocking plate close to the sixth light blocking plate; and
the first reflective element is formed on a side of the sixth light blocking plate close to the fifth light blocking plate, at a position corresponding to the opening of the fifth light blocking plate, and an opening is provided in the sixth light blocking plate at a position corresponding to the second reflective element.

7. The under-screen optical fingerprint module as claimed in claim 6, wherein for each of the optical transmission paths:
on the side of the fifth light blocking plate close to the sixth light blocking plate, a first protrusion is provided between an edge of the opening and the second reflective element;
on the side of the sixth light blocking plate close to the fifth light blocking plate, a second protrusion is provided at a position corresponding to the first protrusion; and
there is a gap between the first protrusion and the second protrusion to define a light transmission port that allows the light to pass through.

8. The under-screen optical fingerprint module as claimed in claim 6, wherein for each of the optical transmission paths:
a third protrusion is provided on the side of the fifth light blocking plate close to the sixth light blocking plate, and the third protrusion is configured to isolate the light in adjacent optical transmission paths.

9. The under-screen optical fingerprint module as claimed in claim 8, wherein
the third protrusion extends to a surface of the sixth light blocking plate and surrounds the first reflective element and the second reflective element.

10. The under-screen optical fingerprint module as claimed in claim 6, wherein for each of the optical transmission paths:
a third protrusion is provided on the side of the sixth light blocking plate close to the fifth light blocking plate, and the third protrusion is configured to isolate the light in adjacent optical transmission paths.

11. The under-screen optical fingerprint module as claimed in claim 10, wherein
the third protrusion extends to a surface of the fifth light blocking plate and surrounds the first reflective element and the second reflective element.

12. The under-screen optical fingerprint module as claimed in claim 3, wherein a first light-blocking structure is provided between the first reflective element and the second reflective element, and the first light-blocking structure has a light transmission port that allows the light to pass through;
wherein the light transmission port is located on a connecting line between the first reflective element and the second reflective element, and is configured to allow the light propagated between the first reflective element and the second reflective element to pass through, and an aperture of the light transmission port is smaller than an aperture of each of the two reflective surfaces.

13. The under-screen optical fingerprint module as claimed in claim 1, wherein for each of the optical transmission paths, a second light-blocking structure is provided between two adjacent optical transmission paths; and
the second light-blocking structure is configured to isolate the light in the two adjacent optical transmission paths.

14. The under-screen optical fingerprint module as claimed in any one of claims 1 to 13, wherein
an aperture of the light outlet is smaller than an aperture of the corresponding photosensitive unit.

15. A display screen assembly, comprising an under-screen optical fingerprint module and a display screen body arranged above the under-screen optical fingerprint module, wherein the under-screen optical fingerprint module comprises an image sensor and a light transmission layer; the image sensor has a plurality of photosensitive units; the light transmission layer is located under the display screen body and covers the image sensor, and the light transmission layer is provided with optical transmission paths each corresponding to one of the photosensitive units; each of the optical transmission paths is provided with a collimating element and a light outlet; and light transmitted through the display screen body enters each of the optical transmission paths through the collimating elements, travels to the light outlets along the optical transmission paths, and is incident, from the light outlets, on the corresponding photosensitive units.

16. The display screen assembly as claimed in claim 15, wherein each of the optical transmission paths is provided with at least two reflective elements;
the light transmitted through the display screen body enters each of the optical transmission paths through the respective collimating element, and is reflected by the at least two reflective elements to the respective light outlet, and then is incident, from the light outlet, on the corresponding photosensitive unit; wherein a propagation direction of the light between two adjacent reflective elements is at an angle with respect to an optical axis of the collimating element.

17. The display screen assembly as claimed in claim 16, wherein the at least two reflective elements of each of the optical transmission paths comprise a first reflective element and a second reflective element, and a reflective surface of the first reflective element and a reflective surface of the second reflective element are arranged opposite to each other; and
wherein the first reflective element is arranged on the optical axis of the collimating element, the reflective surface of the first reflective element faces a light-emitting surface of the collimating element, and the reflective surface of the first reflective element is at an angle with respect to the optical axis; and
the second reflective element is arranged on an axis perpendicular to a plane where the light outlet is located.

18. The display screen assembly as claimed in claim 17, wherein the light transmission layer is multi-layered, and comprises a first light blocking plate, a first guide plate, a second light guide plate and a second light blocking plate which are arranged in order from a bottom of the display screen body towards the image sensor;
wherein for each of the optical transmission paths:
an opening is provided in the first light blocking plate;
the collimating element is formed on a side of the first light guide plate close to the first light blocking plate, at a position corresponding to the opening of the first light blocking plate, the second reflective element is formed on a side of the first light guide plate close to the second light guide plate, and the second reflective element is staggered from the collimating element;
the first reflective element is formed on a side of the second light guide plate close to the first light blocking plate, at a position corresponding to the collimating element, and an opening is provided in the second light guide plate at a position corresponding to the second reflective element; and
an opening is provided in the second light blocking plate at a position corresponding to the opening of the second light guide plate, and the opening of the second light blocking plate is aligned with the corresponding photosensitive unit.

19. The display screen assembly as claimed in claim 17, wherein a first light-blocking structure is provided between the first reflective element and the second reflective element, and the first light-blocking structure has a light transmission port that allows the light to pass through;
wherein the light transmission port is located on a connecting line between the first reflective element and the second reflective element, and is configured to allow the light propagated between the first reflective element and the second reflective element to pass through, and an aperture of the light transmission port is smaller than an aperture of each of the two reflective surfaces.

20. An electronic device, comprising the display screen assembly as claimed in claim 15, and a housing;
wherein the housing comprises a bottom plate and side walls arranged on the bottom plate, a receiving space is defined by the bottom plate and the side walls, and the display screen body of the display screen assembly is provided at a top of the housing opposite to the bottom plate; and
the under-screen optical fingerprint module of the display screen assembly is arranged in the receiving space.
